# EUROPEAN PATENT APPLICATION

(11) **EP 4 755 175 A1**
(43) Date of publication of application: **10.06.2026**
(21) Application number: 24217617.0
(22) Date of filing: 04.12.2024
(51) Int. Cl.: A01G 9/02

(54) **MODULE FOR GREENING A FACADE, AND FACADE GREENING SYSTEM**

(71) Applicant: Leber, Martin, 63452 Hanau (DE)
(72) Inventor: Leber, Martin, 63452 Hanau (DE)
(74) Representative: Wolf & Wolf Patentanwaltsgesellschaft mbH

(57) **Abstract**

Known modules (1) for greening a facade (5) have a front element (2) which has a facade side (6) facing the facade (5) and a display side (7) opposite the facade side (6). For providing a greening module for a facade that enables more cost-efficient and height-independent, safer maintenance and utilisation of the planting which is capable of storing the valuable resources of water and energy and, in a particularly preferred form, also emitting these in a controlled manner, it is proposed that the front element (2) comprises a hollow support base (3; 33) with a receptacle (4) for a plant substrate (20) at a distance from the facade side (6), and with panels (12) arranged parallel to one another on the display side (7), which panels form a panel-row (12a) projecting upwards from the support base (3; 33).

## Description

### Technical background

The invention relates to a module for planting on a facade, hereinafter also referred to as "module for greening a facade".

In particular, the invention relates to a front element comprising a hollow support base with a receptacle for a plant substrate spaced from the facade side and a plurality of panels mounted on the side opposite the facade.

The invention also relates to a facade greening system comprising several modules arranged on top of and/or next to one another for greening a facade and storing large quantities of water and energy.

### Prior art

Ensuring the quality of life in urban areas in the future requires the development of solutions to increase resilience to rising temperatures, longer periods of drought and heavy rainfall events.

One promising solution is the creation of so-called sponge cities with intensive greening and decentralised regional water storage capacities.

Planting large trees is only possible to a limited extent due to the limited space available, especially in urban areas with underground railway lines and supply lines. In addition, it takes many years to achieve a significant effect and resistance to heat and strong sunlight, after which intensive care by height workers with special equipment is necessary to maintain the planting and minimise the risk of branch breakage.

The greening of (existing) building facades offers a complementary option with a number of advantages. On the one hand, it leads to a reduction in temperature in the streets and buildings, as well as to an improvement in air quality, in particular by reducing fine dust pollution. It also increases the well-being of the local population and the attractiveness of the city centre for tourists by enhancing the visual appearance and reducing noise pollution.

Various plants and methods are used for facade greening. A basic distinction is made between ground-bound and facade-bound greening.

For ground-based facade greening, both self-climbing plants that form adhesive organs, such as ivy, and scaffold climbing plants that hook into a scaffold, cling to it or wrap around it are used.

In contrast to ground-bound greenery, wall-bound greenery is not directly connected to the ground and requires regular irrigation.

The publication CN 214 961 310 U discloses a projecting front element for an external building window with integrated facade greening. The projecting front element, in particular the associated facade greening, is used for sun protection and improved room ventilation. The design of the projecting front element allows for easy planting.

Publication CN 115 126 129 A teaches a projecting front window element for facade greening, the planters of which are arranged in the immediate vicinity of the facade.

Finally, the publication CN 113 261 442 B teaches a vertical greening system for high-rise buildings guided on rails, in which greening modules can be moved in different directions along the high-rise facade for sun protection or thermal insulation purposes according to the solar radiation.

Although the benefits for society are obvious, available facade greening systems have not yet been able to establish themselves across the board, particularly on existing buildings.

In many areas of the city centre, ground-based greening is not possible or only possible or desirable to a limited extent, as the ground is required as a traffic and usable area and the particularly valuable facade areas on the ground floor, which are generally used for shop windows etc., would be restricted.

In the case of curtain and rear-ventilated facades, thermally insulated facing facades, wood-clad facades and trapezoidal sheet metal walls, only scaffold climbing plants are regularly possible, as the shoots of self-climbers grow into joints and crevices and cause damage to the facade by growing thicker.

However, scaffolding systems attached to the facade end present additional structural challenges and considerable investment. The load-bearing requirements make it difficult to attach green facades to existing buildings, particularly those that have been retrofitted with external insulation. These are often statically incapable of absorbing the additional vertical forces of an applied facade greening system.

Known facade greening systems are designed for direct attachment to a wall to be greened. They are attached to the wall using, for example, a bolt, a wall anchor, a screw connection or another wall fastening technique. The wall is the force-bearing component, which limits the dimensions and maximum load-bearing capacity of the facade greening system as a whole, as well as that of a facade greening module.

What all known systems have in common is the cost-intensive maintenance required. In the case of facade-based greening, regular tasks must be carried out to ensure the safety and vitality of the greening system, requiring direct access to the planting five to ten times a year.

With conventional facade greening, plant care is carried out from the outside of the building. At working heights above around 5 metres, cherry pickers are often used for plant care for reasons of fall protection.

As a rule, this requires a footpath and/or road closure and the higher the facade, especially if the facade is higher than 12 metres, not only do the demands on gardeners in terms of their ability to work at height increase, but so do the costs. In addition, the maximum working height of cherry pickers is limited; it is usually less than 25 metres. Alternatively, the use of a working platform that can be lowered from the roof can also be considered. However, this type of maintenance also regularly involves the risk of falling cuttings, so that traffic flow-impairing blocking measures become necessary.

As the aforementioned benefits for society have not been remunerated on a regular basis to date, the construction and in particular the maintenance of a green facade is associated with high running costs, which are not offset by any income that can be generated by the greening system itself in the case of existing solutions, which is one of the main why existing solutions have not yet been able to establish themselves across the board.

### Technical task

The present invention is based on the task of providing a greening module for a facade that enables more cost-efficient and height-independent, safer maintenance and utilisation of the planting, can be retrofitted to an existing building and is capable of storing the valuable resources of water and energy and, in a particularly preferred form, also emitting these in a controlled manner in order to generate income for the operator of the system.

Furthermore, the present invention is based on the task of providing a greening system for a facade that enables a more cost-efficient and height-independent safer maintenance and use of the planting, can be retrofitted to an existing building and is able to store the valuable resources water and energy and, in a particularly preferred form, also to control these, thereby generating income for the operator of the system.

### Summary of the invention

With regard to the module for greening a facade, the above task is solved by the module with the features of claim 1.

The present invention is based on the idea of detaching the primary planting area from the house facade itself and simplifying plant care by allowing work to be carried out from an accessible space created by the support base between the house facade and the side of the planting zone facing the facade

Access to the work area is possible without technical aids from inside the building via an existing opening, such as a window, an external door, an adjoining balcony or a hatch with a fold-out ladder.

The front element comprises a hollow support base with a receptacle for a plant substrate that is spaced from the facade side. A large number of panels are attached to the support base, which are arranged parallel to each other and form a row of panels (panel-row) projecting upwards on the front side, which delimits the planting zone to the outside. The advantages of the panel-row are explained in more detail below with a detailed description of the panels. Among other things, it reduces the risk of clippings falling from the planting zone and protects the plants growing behind it from intense sunlight and excessive heat.

The term "module" refers to a self-supporting assembly made up of several components. The assembly is self-supporting in the sense that the individual components form a mechanical unit after assembly, which can be handled as a whole, such as being transportable and mountable, and which does not require any auxiliary construction to absorb and transfer weight.

The module can be combined with at least one other module of the same type to form a facade greening system. The module advantageously has interfaces for connection to one or more neighbouring modules and for the cross-module transfer of media, such as water, energy and data, which enable it to be assembled into a functional unit, the "facade greening system" according to the invention. The modules each have at least one connecting part that corresponds to the connecting part of a neighbouring module.

For the purposes of the invention, the term "facade" refers to the outer skin of a building (building envelope) and thus all surfaces of the building that seal the building off from the outside.

The term "front element" refers to a component that is intended for installation in front of or on the facade. It has a facade side that faces the facade when installed. Its visible side opposite the facade side contributes to the visible building envelope and thus to the aesthetics of the building.

### Detailed description of the panels

The term "panel" refers to a component in the form of a panel or lamella that has at least one flat side and a small width and thickness compared to its length. At least two panels, particularly preferably at least 8 panels, are preferably arranged on the front side of the front element.

Preferably, they are attached to the top or the front of the support base and form a panel-row projecting upwards from there on the front of the module. In the panel-row, the panels are arranged so that their longitudinal axes run parallel to each other and generally in a vertical direction.

In a particularly suitable embodiment of the module, at least one part of the panels is movably connected to the support base in such a way that their orientation in relation to the support base can be changed and, in particular, that the longitudinal axis of the panel can preferably be rotated or swivelled about a vertical axis.

The rotation or swivelling range preferably extends between 0 degrees (the flat sides of the panels run parallel to the alignment of the front side of the support base) and at least 90degrees (the flat sides of the panels run orthogonally to the alignment of the front side of the support base; referred to below as "zero-degree orientation").

In a particularly preferred embodiment, the distance between neighbouring panels is selected so that in the zero-degree orientation they form a panel-row with a nearly closed surface.

The panels are connected to the support base, for example, via fastening and articulation elements. The fastening and articulation elements are designed so that the panels have an eccentric axis of rotation outside the centre axis or longitudinal axis of the panels, so that the panels are always in front of the front side of the support base, regardless of their orientation. This means that the panel-rows can not only be installed between neighbouring support bases, but can also project beyond them.

This optimises the planting area and ensures that not only the panels of several elements arranged horizontally next to each other, but also the panels of several elements arranged vertically on top of each other form a closed surface in the zero-degree orientation, which increases the utility value, especially as an advertising space.

A predetermined breaking point in the panel at the level of the support base ensures that the possibility of the panels "swinging through" when extinguishing water hits them still exists and that the panels do not necessarily have to be destroyed in order to allow extinguishing water to hit the facade in the event of a fire.

The panels are preferably made of safety glass or another resilient, UV and weather-resistant material with a thickness of less than 2 cm to minimise the impact on the flow of light and visibility.

The panels fulfil the following functions, for example:
1. They form a supporting structure for holding photovoltaic elements and other technical functional units, in particular LEDs.
2. They have a protective function against falling objects and can prevent people from falling.
3. They protect the facade and windows as well as the plant substrate and the plants in it from strong winds and hail.
4. They serve to regulate solar radiation and protect against heat to improve the resilience of the planting.

### Equipping the panels with photovoltaic elements

In a preferred embodiment of the module according to the invention, the panels are equipped with a photovoltaic element on at least one flat side, and in a particularly preferred embodiment with at least two photovoltaic elements (solar modules).

Two solar modules can be mounted on both flat sides of a panel or, in a particularly preferred embodiment, in a so-called "back-to-back arrangement" on the same flat side - for example on the flat side of a glass carrier plate and combined with an inward-facing semi-reflective layer applied to the opposite side of the glass carrier plate.

The double-sided arrangement of solar modules, or a double-sided solar module in a back-to-back arrangement, means that the reflected light from neighbouring modules can also be used to convert energy.

Movable mounting of the panels on the front element enables automatic tracking of the position of the photovoltaic elements to optimise the electrical output.

In contrast to previous greening solutions, which are pure cost factors without the possibility of income, the module can contribute to the generation of electricity and thus to the generation of income and thus also to the compensation of production and maintenance costs of the greening.

A further advantage of equipping the module with one or more photovoltaic elements is that the energy generated can be used directly for the electrical control of electrical component groups of the module and no separate connection to a power grid is required for this. The module is therefore autarkic or self-sufficient in this respect.

The control electronics and converter technology are advantageously modular in design and can be combined with another photovoltaic element of the same module or a neighbouring module, so that synergies can be used in larger systems and not every control component has to be installed in every module.

### Equipping the panels with LED elements

In a preferred embodiment of the module according to the invention, the panels have an "outward" facing front side that is equipped with at least one LED. The plurality of LEDs can be individually controllable. In a particularly preferred version, the light emitted by the LEDs can be influenced by a lens strip fitted in front of them in order to reduce light pollution or to reduce glare for passers-by, residents and vehicle drivers. The individual LEDs can be clearly addressed, allowing them to be combined to form a matrix across modules or buildings.

In another particularly preferred version, a flat side of the panel is additionally or alternatively fitted with LED tiles, so that when several modules are used in a greening system, the special arrangement of the panels in the zero-degree orientation creates a closed LED illuminated surface that spans both horizontally and vertically across the modules and can be used as an advertising space, for example. This makes it possible to generate advertising revenue with the system, particularly at night when no solar energy can be generated.

### Protective effect of the panels

In addition, the panel can also serve as a sunshade slat, which can be twisted to shade the plants, for example to protect them from excessive sunlight and heat intensity.

Especially in combination with the evaporative cooling via the exposed plant substrate, the temporary shading can significantly improve the resilience of plants to extreme solar radiation and intense heat. This is because the solar load limits of most plants are often exceeded at midday on facades in countries with high temperatures, meaning that they cannot be cultivated permanently.

The possibility of temporary shading means that useful plants such as citrus fruits, tomatoes or hemp can also be used to green facades. All of this contributes to improving biodiversity.

The panels also protect the plants and the plant substrate from heavy rain, hail and storms and, by reducing air movement between the heat-radiating building wall and the plants, also help to protect against frost and hoar frost.

Finally, the panels also offer protection from falling people in any orientation and, when closed, protection from falling clippings, so that no roads or pavement closures are necessary to carry out maintenance work, which has a positive effect on maintenance costs and approval options in highly frequented city centre areas.

### Detailed description of a support base

The support base is hollow and preferably made of metal or other high-strength UV and weather-resistant material, which is suitable for accommodating structural and functional groups as well as a water and electricity storage tank. A hollow support base also has the advantage that the structural and functional groups arranged in it are enclosed and protected in such a way that they are not visually recognisable either from the front or from the facade side and are protected from unauthorised access and vandalism.

In a preferred embodiment, the support base is part of a water supply device via which water can be supplied to the receptacle for the plant substrate. The water supply device advantageously has a water reservoir and a water supply control system.

It has proven to be favourable if the support base has a length in the range of 1 m to 2.50 m, a width in the range of 0.75 m to 1.5 m and/or a height in the range of 0.3 m to 0.5 m. Preferably, the distance between the support area for the planting substrate and the facade side is at least 0.5 m, particularly preferably it is in the range of 0.5 m to 1.0 m, so that a maximum depth of 1.5 m of the front element is not exceeded.

In order to increase the range of applications, particularly when retrofitting to existing buildings, the support base is provided with at least one connection point to accommodate a vertical support column, via which the module can be supported on a force-absorbing mount (a substructure), for example the floor or a module underneath.

It is also possible to work only with facade-side support columns so as not to impair the traffic routes at the lowest level. In this case, the facade-side support columns transfer the vertical forces to the mount so that the facade only has to absorb horizontal forces, which are comparatively low, especially if the facade greening system is installed over a large vertical extent, which has a positive effect on the leverage ratio between the cantilevering of the modules and the height of the system. This means that the module can also be used in front of facades that are less capable for bearing weight.

It is also possible for the support column to be designed in such a way that the system can be self-supporting on the mount via the support column.

In this case, the mount must be selected in such a way that it can fully absorb both the vertical and horizontal forces that are transmitted to it by the load-bearing support column.

The horizontal forces on the facade can optionally be cancelled out by additional support columns attached in the area of the front side at the lowest level, but also by mutual support of two opposing facade greening systems according to the invention by means of a connecting traverse, as well as by the multi-sided conversion of a building.

Advantageously, the length of the support column can be selected as required. This means that both the individual module and the facade greening system as a whole can be easily adapted to an existing building to be greened and the dimensions specified by it, for example to specified storey heights or window spacings. In addition, variable-length support columns allow modules to be disassembled and rebuild on another building, even if the storey heights of the buildings differ.

In a particularly preferred embodiment, the support base can be walked on. The support base can be walked on both when mounted and dismounted, at least in the area between the receptacle for the plant substrate and the facade. By walking on the support base, complete plant care "from behind" (the panel-rows) is possible instead of plant care from the front. Accessible here means that the support base is designed to be walked on by at least one person. Preferably, the support base and the support column are designed in such a way that a weight of at least 1,250 kg, particularly preferably at least 15,000 kg, can be removed per module.

It has proven to be a good idea if the support column is a support tube, whereby the support tube is part of the water supply system.

The support tube is designed in such a way that water can be supplied to or drained from the support base and, in particular, the receptacle for the plant substrate.

In addition, power and/or data cables can also be routed in a support column in the form of a support tube. Preferably, the module has two supports in the form of support tubes, namely a water pipe support tube, via which water can be drained and/or fed to the support base, and a cable routing support tube, in which - comparable to a cable duct - power and/or data cables can be routed.

### Optional integrated water supply

In a preferred embodiment of the module according to the invention, the hollow support base is part of a water supply device.

The support base, in conjunction with any support column in the form of a support tube, represents a water storage and irrigation system to which rainwater in particular can be fed from the roof of a building and, as required, released in a controlled manner to the planting zone of the module or neighbouring modules, water distribution points or into the public sewage system.

The module according to the invention dispenses with soil-bound planting. This makes it necessary to regularly supply the plant substrate with water. The supply can be provided with drinking water, groundwater from wells or rainwater. Rainwater has the advantage that it is soft and contains no lime, which benefits both the plants and the technical components. The water supply to the plant substrate is preferably not applied to the plant substrate, but from below, close to the roots. This reduces evaporation and improves the effectiveness of the irrigation. In this context, it has proven useful if the water supply system has a water reservoir and a water supply control system.

A water reservoir is used to store the valuable resource of water and keep it available even during dry periods. Preferably, the water reservoir is integrated into the support base.

The water supply control system preferably comprises a water metering device, for example an electrically controllable valve and a control unit for it. The water supply control system can be used to adjust the water supply or the water flow to the intake and/or the water storage tank. Preferably, the water storage tank is equipped with a controllable drain valve for the targeted discharge of water.

A support base of the preferred maximum size (2.50m x 1.50m x 0.5m) is suitable for storing up to 1,000 litres of water per module. When retrofitting a four-storey street on both facade walls, the system can store up to 320,000 litres of water per 100m street length. By using the modules over a large area, a "sponge effect" can be created. The city becomes a "sponge city", which relieves the sewer system during heavy rainfall events and enables a decentralised, continuous water supply for plants and people during dry periods.

The water reservoirs of modules arranged one above the other are fluidically connected to each other. The water storage tanks are filled from top to bottom. This means that when a predetermined water level is reached in the upper water storage tank, water flows - for example via an overflow or valve-controlled - into the water storage tank of the module arranged below. If water is required in the modules at the bottom, a valve-controlled, forced water outflow takes place from the upper modules. If heavy rainfall is expected, the water can also be drained into the sewer system in advance to create capacity for the expected rainwater.

### Optional integrated UV element for water purification

Preferably, the water supply is equipped with a UV unit for purifying, in particular for disinfecting the water. This can be integrated into the water reservoir or into a component connected to the water reservoir. The disinfection UV unit prevents the formation of algae in the water supply system and enables good water quality even over longer dry phases.

### Optional integrated compartment for holding a power storage element

In a particularly preferred embodiment, the support base has a compartment for holding at least one electrical power storage element (accumulator), which will store the energy converted into electricity via the panels.

The at least one accumulator is preferably arranged in the area of the facade side and has connectors integrated into the panels and/or the support column, by means of which it can be connected to other accumulators in the support bases of neighbouring modules.

The stored electricity can be used to supply the electrical components of the module, in particular to move the panels and/or for lighting, and it can also be supplied to the operator of the module for facade greening, the general power grid or via optional supply terminals, e.g. as a charging station for electric vehicles, also to third parties in a controlled manner in order to generate revenue.

### Optional integrated communication element

In a particularly preferred version, a communication module for wireless LAN and/or mobile communication is also mounted into the hollow support base. This is used to communicate measured values and control signals for the panels and any valves of the module, but can also be used to cover another basic need of the modern population, namely the availability of Internet access, e.g. as a WLAN or mobile phone repeater, in order to provide a source of income for the operator in this way.

### Optional integrated lighting element

Advantageously, the support base has an underside in which at least one light source is integrated. This can be used, for example, to improve plant growth and to illuminate a walkway running under the module.

Preferably, the direction of radiation of the light source points away from the module; it is directed "downwards", so that in the case of a module on the lowest level it points away from the support base in the direction of the ground and can be used, for example, for walkway lighting. On upper module levels, the light source can be used to illuminate a module arranged below, in particular to generate pleasant lighting, to optimise the psychological well-being of residents in seasons or areas with low sun intensity, to simulate increased solar radiation in the windows and/or to optimise the growth of planting.

By directing the light source "downwards" and shading the light generated by the light source upwards through the support base, less light pollution is generated than with conventional walkway lighting. The light source is, for example, a light strip, preferably an RGB CCW LED element. Preferably, the light colour and/or the light intensity of the light source can be adjusted. This allows both a light that is adapted to the ambient light and is as pleasant as possible for insects and people and an effect light to be generated, for example in amusement streets.

The adaptability of the light colour and/or light intensity also makes it possible to operate significantly higher light intensities temporarily and regionally as required, for example when accidents or emergencies need to be attended to.

### Optional power terminal and/or water terminal

It has proven to be advantageous if at least one support column has an electricity terminal for drawing off electricity and/or a water terminal for the controlled release of water. Excess electricity, i.e. the electricity generated in excess of that required to operate the module or the facade greening system, as well as the electricity stored in a battery, can be made available for immediate use via such an electricity terminal, for example to charge batteries, in particular an electric vehicle, or to generate income by selling the surplus water or surplus electrical energy. Water can be supplied via the water terminal.

### Optional mounting rail

In a preferred embodiment of the module according to the invention, it is provided that a rail for a rail-mounted tool is mounted on the underside of the support base.

Rail-mounted tools can be used for plant care, for example a robot arm that can be moved on rails to carry out care tasks and/or a camera that can be moved on rails to recognise the condition of the plants or system defects and control care tasks. This enables cost-effective, automated plant care, especially in comparison to the use of specially trained height workers. The camera is advantageously equipped with remote direction and zoom control and is designed as a so-called PTZ camera (pan-tilt-zoom).

It has therefore proved useful if a rail corresponding to the rail-mounted tools is mounted in or on the support base. Preferably, the rail is designed so that it can be connected to the rail of a neighbouring module. This enables the rail-mounted tool to be used across modules. It has proven to be favourable if the rail is designed to supply the rail-mounted tool with power. In the simplest case, the rail is supplied with power from the rechargeable battery mounted into the support base so that maintenance work on the plants can also be carried out without an external power source, i.e. self-sufficiently or autarkic.

### Module for mounting in flown version

Instead of or in addition to an embodiment of the module according to the invention with one or more support columns, via which the module is supported on a mount (for example the ground or on a module arranged underneath), in a further embodiment of the module a stable connecting element is provided on the facade side, by means of which the module can be mounted on the facade.

This embodiment also allows the module or a series of neighbouring modules to be mounted without support columns in a so-called "flown version".

### Greening system comprising several modules according to the invention

With regard to the facade greening system, the above technical problem is solved according to the invention by a system with the features of claim 15.

The facade greening system has a modular structure and comprises at least two modules according to the invention for greening a facade. The modules are self-supporting structural units and can be arranged on top of and/or next to each other. They are statically and technically connected to each other. The technical connection is such that technical components can be addressed both individually and across systems and can be controlled if necessary. The static connection of neighbouring modules takes place via corresponding connecting parts on both sides.

The modules have a support base from which a large number of panels protrude upwards, which together form a panel-row. The length of the panels corresponds approximately to the storey height, so that when the modules are arranged one above the other, the panel-row of the lower module extends up to the underside of the support base of the upper module.

The modular structure enables a facade greening system of variable size and shape, which is particularly easy to adapt to the given shape of a facade to be greened.

Even if it is technically possible to design the modules in such a way that they function completely independently and autarkic, it has proven to be particularly advantageous in some applications that at least some of the individual components can be addressed uniquely in order to centrally control as many modules for greening a facade as possible, but also across buildings as an overall system, and to centrally manage the resources created and stored.

With a correspondingly large number of networked and appropriately planted modules, certification of the system for trading CO₂ certificates is also conceivable as a further revenue opportunity. Correspondingly large amounts of data can be used to train AI systems to optimise water management. The provision or utilisation of resources from modules of different operators can also automated and handled directly between the modules, whereby the transfer costs can be reduced and misuse avoided through smart contracts and the use of blockchain technology.

The multi-sided; at least two-sided, preferably at least three-sided, conversion of a building with the facade greening system according to the invention with a top row of modules projecting upwards above the building enables the installation of a connecting, cross-module platform which is supported on the top row of modules. This connecting, cross-module platform can be used, for example, to install further solar modules, as a roof garden or as a landing site for an EVTOL or another vertical take-off transport device.

Like the individual modules of the facade greening system according to the invention, it is self-supporting in the sense that it does not require an auxiliary structure to absorb and transfer weight, but has a load-bearing capacity that is higher than the system's own weight.

### Detailed description of the invention

The invention is explained in more detail below with reference to embodiments and drawings. In detail, a schematic representation is shown:
- **Figure 1**: An embodiment of a module according to the invention for greening a facade, which is arranged in front of a house facade and is supported on the ground via two support tubes on the facade side in a first perspective view,
- **Figure 2**: a second perspective view of the module shown in Figure 1,
- **Figure 3**: a panel with a photovoltaic element,
- **Figure 4**: a schematic structure of a panel provided with a photovoltaic element,
- **Figure 5**: an example of a facade greening system according to the invention used on one side of a high-rise building or apartment block, in a partial view of the green facade,
- **Figure 6**: an example of a facade greening system according to the invention in a self-supporting, multi-sided design for use on a detached house, and
- **Figure 7**: an example of a facade greening system according to the invention in use on the facade of a villa in a flown installation.

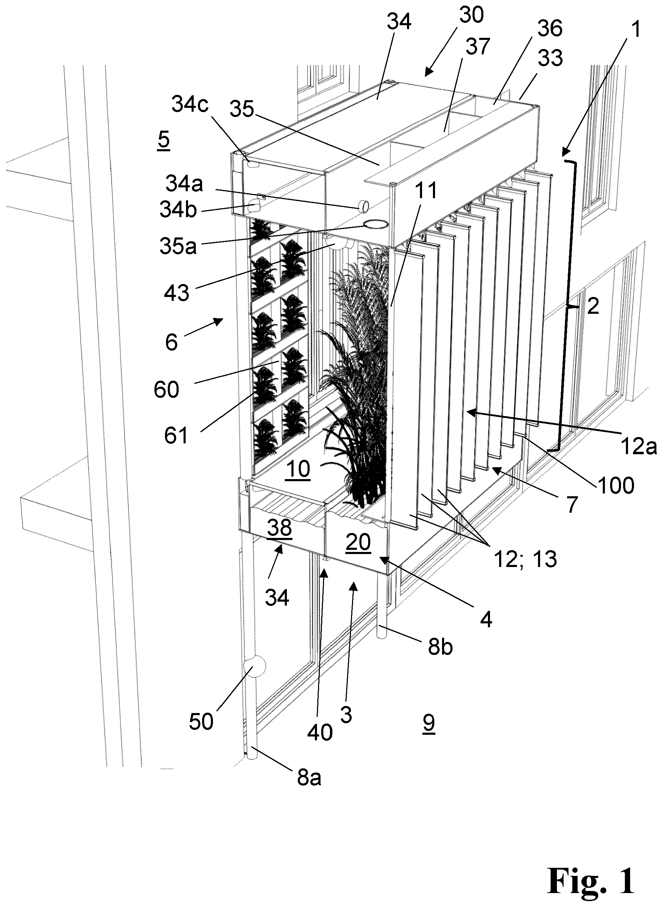

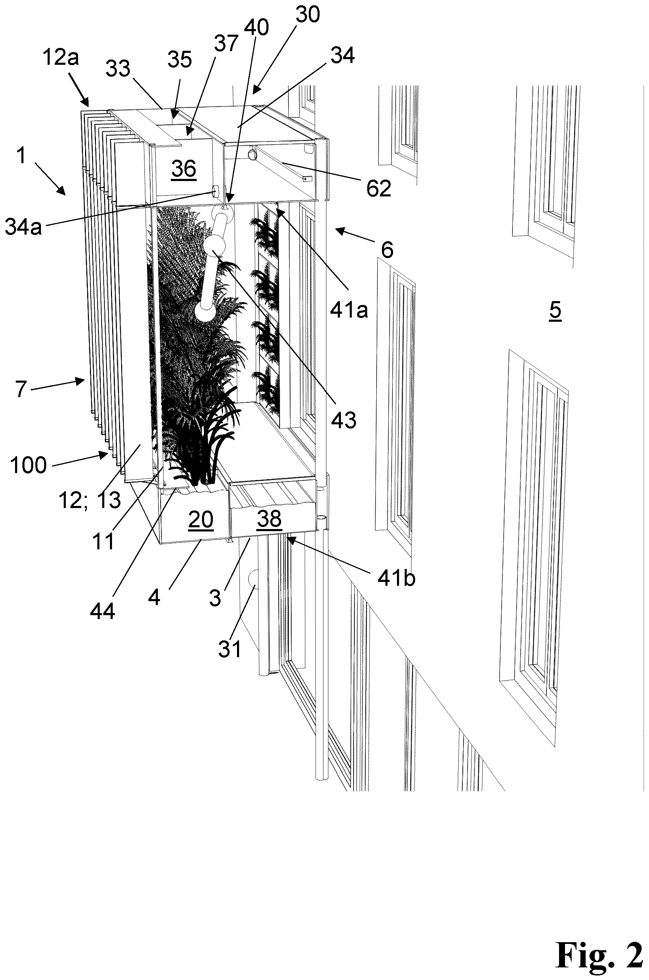

**Figures 1** **and** **2** each show a perspective view of a first embodiment of a module 1 according to the invention for greening a facade 5. A second module is arranged above the module 1, of which only the support base 33 is shown in Figures 1 and 2 for reasons of simplification. In their entirety, both modules form a facade greening system 30 according to the invention. Module 1 comprises a front element 2, which has an L-shaped cross-section in the side view shown. The short L-leg is formed by a walkable support base 3, which comprises a receptacle 4 for a plant substrate 20, and the long L-leg by ten lamellar or plate-shaped panels 12 with a length of approximately 250 cm and a plate thickness of less than 20 mm, which project upwards from the support base 3 and are arranged parallel to one another in a panel-row 12a.

The front element 2 has a facade side 6 facing the facade 5 and a front side 7 opposite it. The panels 12 have a supporting aid 11 with photovoltaic elements 13 attached to it. The plate-shaped panels 12 are identical in construction and have a length that corresponds approximately to the storey height, so that the panel-row 12a of the lower module 1 extends up to the underside of the support base 33 of the upper module.

The panels 12 are mounted on the support base 3 by means of the supporting aid 11 via mounting elements 100 made of a high-strength, UV- and weather-resistant material so that they can pivot about an axis of rotation that runs eccentrically to their centre axis. They are designed and arranged relative to each other in such a way that when the panels 12 are swivelled in, a closed wall of abutting or overlapping photovoltaic elements 12 is formed. The mounting plate 44 (Fig. 2) serves as a lower attachment point for attaching the panels 12 held by the mounting elements 100. It partially covers the planting area, which reduces any impairment of the hinge mechanism of the mounting elements 100 due to plants or evaporation. The panels 12 are also designed as photovoltaic elements 13 and each comprise a glass carrier plate, an at least partially transparent thin-film solar module and a reflector.

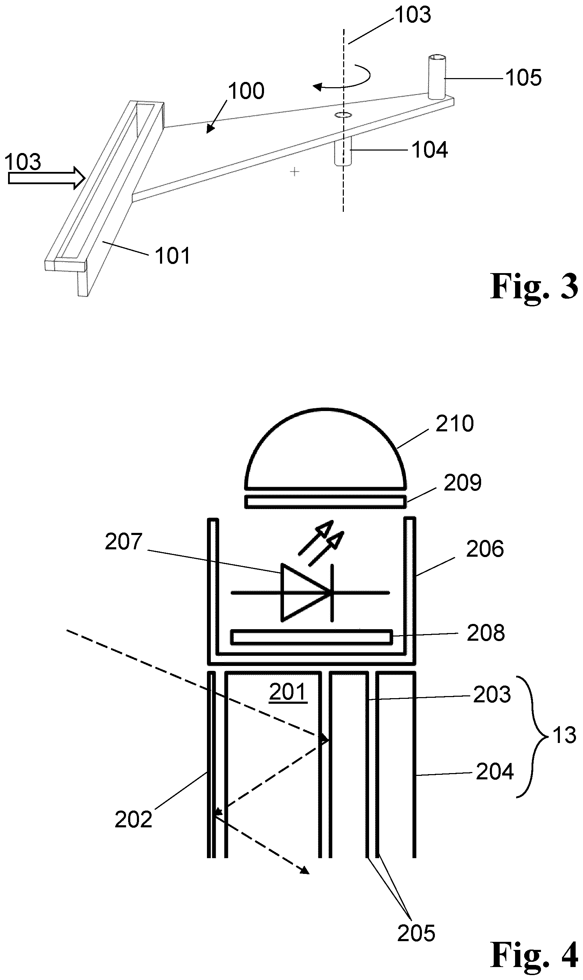

The glass carrier plate 201 (Fig. 4) has two opposite flat sides and four outer sides. The thin-film solar module 203; 204 is glued to one of the flat sides of the glass carrier plate 201, while the reflector 202 is attached to the opposite flat side of the glass carrier plate 201. The thin-film solar module is at least partially transparent and has a thickness of approximately 1 mm. Preferably, the reflector is also transparent with a transparency in relation to the aforementioned wavelength range of 300 to 1,200 nanometres. The panels 12 can shade the facade in front of which they are mounted.

This applies in particular to the windows inside. If a light strip with RGB CCW LEDs is applied to the four outer sides of the glass carrier plate or the entire photovoltaic element, the light colour and the light intensity that passes through the window into a room behind it can be at least partially compensated and/or controlled depending on the time of day.

The support shelves 3, 33 are made of hot-dip galvanised steel and each have a length L of 2500 mm, a width B of 1500 mm, and a height of 500 mm. The support base 33 of the second module is shown unplanted to better explain the structure, whereas the support base 3 of module 1 is planted; it shows the support base 3 under operating conditions. The support bases 3, 30 are otherwise identical; they have several compartments 34, 35, 36, 37. The compartments 35 and 36 are receptacles for the plant substrate 20, for example for potting soil or an alternative plant substrate, and can therefore be planted. In module 1, the support base 3 is shown planted. The receptacle 4 for the plant substrate 20 is filled with potting soil and planted with fern species. In order to be able to introduce more plants, secondary greenery is introduced into nutrient compartments 61, which are not connected to the facade but are part of the module. The nutrient compartments 61 are supplied with water via the irrigation pipe 60. Compartment 34 is a water reservoir with a sterilisation UV unit 62 arranged in it. In module 1, the water reservoir in compartment 34 is half filled with water 38. Compartment 34 is covered with a lid 10. This has the advantage that damage to the compartment 34 is prevented even if the water 38 in the compartment 34 freezes, since upward expansion of the water 38 is still possible. The water reservoir has an inlet 34c and an outlet 34b; it is part of the water supply that supplies the compartments 35 and 36, i.e. the receptacles 4 for the plant substrate 20, with water. The compartments 35 and 36 have a water inlet 34a. The water inlet 34a is provided with an electrically controllable valve, so that the flow of water to the compartments 35 and 36 can be controlled. In particular, compartments 35 and 36 each have a sensor for detecting the substrate moisture (not shown). The values recorded by the sensors are used as the basis for controlling the electrically controllable valve. In this way, overwatering of the plant substrate 20 is counteracted. The water reservoir in compartment 34 is fed with rainwater from the roof via the support columns in 8a, 8b in the form of support pipes. Excess water is fed into the sewerage system. In the smaller compartment 37 there is a technical room in which a communication module in the form of a WLAN repeater, a battery as a storage unit for the energy generated by the photovoltaic elements 13 and a control unit for the communication module, for the photovoltaic element 12 and for adjusting its angle of rotation for the purpose of sun position tracking, for the battery, for the inlet 34c and the outlet 34b and the water inlet 34a are housed. The space above the compartment is overgrown by the planting in the neighbouring compartments 35 and 36.

A light source 35a, which comprises several individually controllable LEDs, is integrated into the undersides 41a, 41b of the support bases 3, 33. This makes it possible to adjust both the light colour and the light intensity of the radiation emitted by the light source 35a. The light source 35a is used to illuminate the underlying module or to illuminate the walkway or floor. In addition, a rail 40 for a rail-mounted tool is integrated into the support base 3, 33. The rail 40 is electrically conductively connected to the battery in compartment 37, so that a rail-mounted tool can be supplied with power via the rail 40. Figures 1 and 2 show an example of a PTZ camera 43 that operates across modules, is guided on the rail 40 and supplied with power for monitoring the modules and the planting therein. The image data is communicated via a WLAN module integrated into the module and the Internet, so that the images can also be evaluated using powerful artificial intelligence hosted in external data centres.

Two support columns 8a, 8b are arranged on the facade side 6 of the front element 2, via which the module 1 is supported on the ground 9. The support columns 8a, 8b are tubular in shape. The support column 8a serves as a cable guide for power and data cables. Rainwater from the roof (not shown) can either be fed to the drainage system or to the support bases 3, 30 through the support column 8b. A power terminal 50 is attached to the outside of the support column 8a for the extraction of power, in particular for the extraction of the power generated by the photovoltaic elements 13 or for the extraction of power from the battery in compartment 37. An extraction point 31 for the extraction of water is arranged on the support column 8b.

**Figure 3** shows a perspective view of a mounting element 100 for a panel. The mounting element 100 has a receptacle 101 for the panel, which can be opened at one side so that the panel including a photovoltaic element (both not shown) can be inserted in the direction of arrow 102. The receptacle 101 is designed in such a way, that the panel can be firmly connected to the receptacle 101, for example by one or more screw connections. The mountings are mounted to the support base via a perforated plate, which also allows the elements to be installed inwards. This allows an undulating outer edge to be realised, creating a more organic overall appearance. The mounting element 100 can be rotated around the axis of rotation 103, which can be used, for example, to track the position of the photovoltaic element in the sun. The rotational movement is achieved by moving the pin 105 in the direction of the arrow 104 and in the opposite direction. In addition, the panel is held by a correspondingly designed upper mounting element, which is not shown here for reasons of simplification. This is because the upper mounting element and the lower mounting element 100 are mirror-symmetrical to one another. By using at least two connecting elements per panel, redundant security against the panel falling in the event of structural failure of a connecting element is achieved.

The main advantage of the holder shown in Figure 3 is that it has a particularly gentle deflection behaviour to protect the plants behind it. In addition, it is possible to extend the panels beyond the support base above. This not only maximises the total area of the panels, but also enables a continuous LED line over several storeys if, for example, a strip light is attached to the sides of the panels.

**Figure 4** shows the schematic structure of a panel including a photovoltaic element 200. The panel comprises a glass carrier plate 201 with a thickness of 10 mm. The glass carrier plate consists of anti-reflective toughened safety glass (ESG) and serves as a carrier element for a mirror foil 202, an LED mounting frame 206 and two identical solar cells 203, 204, which are aligned with their rear sides 205 towards each other (back-to-back mounting). The front sides of the solar cells 203, 204 face outwards so that light can strike them and be converted by them into electricity. The mirror foil 202 is orientated so that its reflective side points in the direction of the glass carrier plate 201. The light reflected in the solar cell 203 is thus reflected back into the glass carrier plate 201, so that at least part of it emerges again on the side of the photovoltaic element 200 facing the house facade. Alternatively, a thin-film solar module (not shown) can be fitted instead of the reflective film 202. The LED mounting frame 206 serves to accommodate one or more LEDs and/or a light strip. Figure 4 shows an example of an RGBW LED 207 arranged on a carrier strip 208. A carrier element 209 for a lens 210 and the lens 210 for beam control of the luminous flux from the RGBW LED 207 is arranged above the RGBW LED 207. The beam path can be optimised by moving the carrier strip 208, for example by directing it towards the ground in order to reduce glare for residents and light pollution and to improve the illumination of street areas or the atmosphere and legibility of advertising messages.

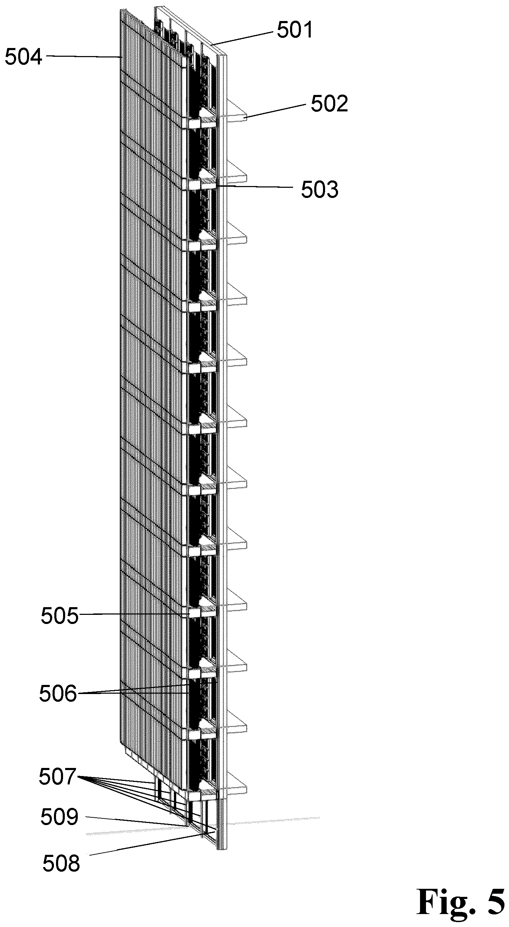

**Figure 5** schematically shows the use of the facade greening system according to the invention in a single-sided, supported application on the facade of a multi-storey high-rise building 501 in the city centre. The high-rise building is represented by facade 501. The system 504 is self-supporting by means of vertical supports 507 arranged on the facade-side on a foundation 509, via which the vertical forces are dissipated into the ground. The horizontal forces are transferred into the building structure by means of anchors 503 attached to the support bases 505 at the height of the ceilings 502. The shop windows 508 on the ground floor are not only minimally affected and can still be used. Fig. 5 shows only a section of the high-rise building that is represented by the facade 501; the foundation is designated by the reference number 509.

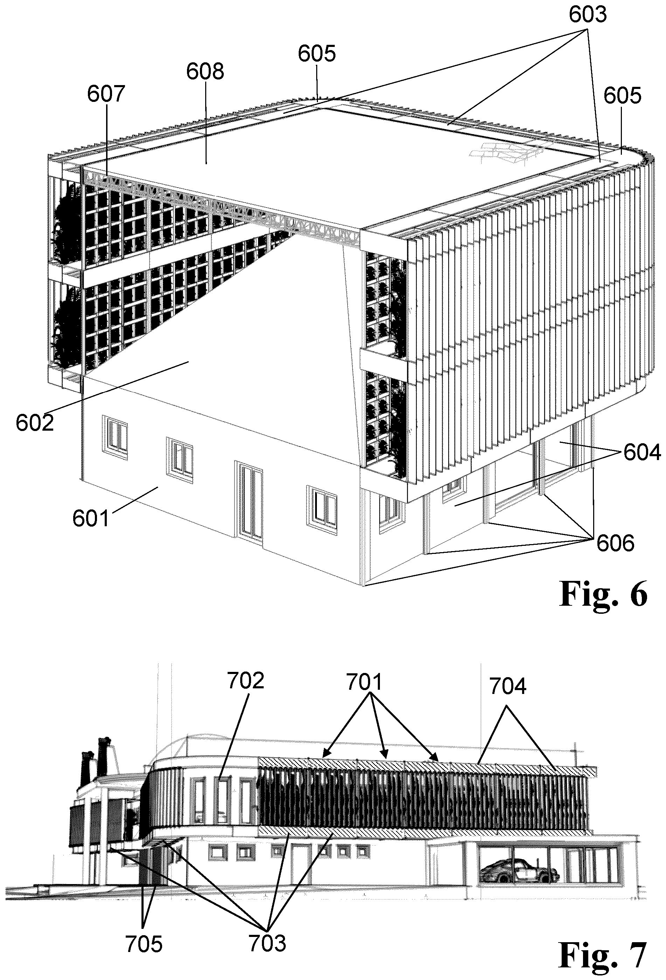

**Figure 6** schematically shows the use of system according to the invention for a multi-sided greening of the facade of a single-family house 601 with a pitched roof 602. The system 603 is installed self-supporting on several sides of the facade 604 of the house and is also connected to each other across the facade by corner elements 605 and supported on a foundation by vertical supports 606, so that no horizontal and also no vertical forces have to be transferred into the facade.

In addition, the system is designed to project above the ridge of the roof 602 so that connecting traverses 607 and a platform 608 can be installed, which is supported on the uppermost row of modules. This connecting, cross-module platform 608 can be used, for example, to install further solar modules, as a roof garden or as a landing site for an EVTOL or another vertical take-off transport device.

**Figure 7** schematically shows the use of the facade greening system according to the invention on the facade of a villa with two storeys. Around the second floor, which is equipped with high windows 702, several modules 701 are arranged close together in a continuous row. The height of the modules 701 is slightly greater than the window height and the module width covers approximately two neighbouring windows. The modules 701 are self-supporting and each have a support base 703 on their underside and a on their upper sidecover 704 , which largely corresponds to a support base in terms of design and function. In contrast to the modules 1 of Figures 1 and 2, the modules 701 are not supported on bearing supports, but are by means of screws which through firmly connected to the villa facade are guided 704 and the support base 703 the cover. Panels are also installed as flexible privacy screens on the ground floor to the right and left of the entrance door 705.

## Claims

1. Module (1) for greening a facade (5), having a front element (2) which has a facade side (6) facing the facade (5) and a display side (7) opposite the facade side (6), comprising a hollow support base (3; 33) with a receptacle (4) for a plant substrate (20) at a distance from the facade side (6), and with panels (12) arranged parallel to one another on the display side (7), which panels form a panel-row (12a) projecting upwards from the support base (3; 33).

2. Module according to claim 1, **characterised in that** at least one part of the panels (12) has a panel longitudinal axis and is movably connected to the support base (3; 33) in such a way that the panel longitudinal axis is preferably rotatable about a vertical axis.

3. Module (1) according to one of the preceding claims, **characterised in that** the support base (3; 33) is part of a water supply device via which water can be supplied to the receptacle (4) for the plant substrate (20).

4. Module (1) according to claim 3, **characterised in that** the water supply device has a water reservoir and a water supply control system.

5. Module (1) according to one or more of the preceding claims, **characterised in that** the support base (3; 33) can be walked on.

6. Module according to one or more of the preceding claims, **characterised in that** a support column (8a; 8b) is arranged on the facade side (6), via which the module (1) can be supported on a mount.

7. Module (1) according to claim 3 and one of claims 4 or 5, **characterised in that** the support column (8a; 8b) is a supporting tube which is part of the water supply device.

8. Module (1) according to one of claims 6 or 7, **characterised in that** the front element (2) has at least one connecting part to a corresponding connecting part of an neighboring module.

9. Module according to one or more of the preceding claims, **characterised in that** a connecting element is provided on the facade side (6), by means of which the module can be mounted on the facade.

10. Module (1) according to one of the preceding claims, **characterised in that** at least part of the panels (12) has a photovoltaic element (13), preferably in the form of a thin-film solar module.

11. Module (1) according to claim 10, **characterised in that** two photovoltaic elements (13) are mounted in a back-to-back arrangement on a glass carrier plate (201), and the opposite side of the glass carrier plate (201) is provided with a reflector (202).

12. Module (1) according to one of the preceding claims, **characterised in that** a communication module, a rechargeable battery, a control unit for a communication module or for a photovoltaic element (13) and/or a rechargeable battery are mounted in the hollow support base (3; 33).

13. Module (1) according to one of the preceding claims, **characterised in that** a rail for a rail-mounted tool is mounted in or on the support base (3; 33), the rail preferably being designed to supply the rail-mounted tool with power.

14. Facade greening system (30), comprising at least two modules (1) statically and technically connected to one another one above the other and/or next to one another for greening a facade (5) according to one of the preceding claims 1 to 13.

15. Facade greening system according to claim 14, **characterised in that** it is self-supporting in the sense that its load-bearing capacity is higher than the system's own weight.
